# EUROPÄISCHE PATENTSCHRIFT

(11) **EP 2 347 887 B1**
(45) Veröffentlichungstag und Bekanntmachung des Hinweises auf die Patenterteilung: **25.09.2013**
(21) Anmeldenummer: 10015311.3
(22) Anmeldetag: 04.12.2010
(51) Int. Cl.: B29C 49/58, B29C 49/78, F16K 3/24, F16K 31/12

(54) **Ventileinrichtung**
Valve device
Dispositif d'aération

(30) Priorität: 21.12.2009 DE 102009059829
(43) Veröffentlichungstag der Anmeldung: 27.07.2011
(73) Patentinhaber: FESTO AG & Co. KG, 73734 Esslingen (DE)
(72) Erfinder: Skobjin, Wolfgang, 73230 Kirchheim (DE); Bürk, Erwin, Dr., 70190 Stuttgart (DE); Krapf, Michael, 73779 Deizisau (DE); Schill, Sebastian, 72581 Dettingen/ Erms (DE)
(74) Vertreter: Vogler, Bernd

(56) Entgegenhaltungen:
- WO-A1-2009/010096
- DE-U1- 20 305 232
- FR-A1- 2 872 082
- US-A1- 2002 129 855

## Beschreibung

Die Erfindung betrifft eine Ventileinrichtung für eine mit Hochdruck arbeitende Blaseinrichtung einer Blasmaschine zur Erzeugung von geblasenen Hohlkörpern, mit wenigstens einem Ventil, das an eine Anbaufläche eines zur Blaseinrichtung gehörenden Ventilträgers derart anbaubar ist, dass wenigstens ein Ventilausgang des Ventils über wenigstens einen im Ventilträger ausgebildeten Arbeitskanal mit einer ebenfalls zur Blaseinrichtung gehörenden Blasdüse zur pneumatischen Ansteuerung koppelbar ist, wobei die Ventileinrichtung mehrere Ventile aufweist, die allesamt in einem gemeinsamen, mit einer Montagefläche zum Anbau an die am Ventilträger ausgebildete Anbaufläche ausgestatteten Ventilgehäuse derart untergebracht sind, dass im Ventilgehäuse mehrere längliche Gehäuseausnehmungen ausgebildet sind, in die jeweils ein länglicher Ventilschieber mittels Druckluftbeaufschlagung verschieblich gelagert aufgenommen ist.

Die 203 05 232 U1 offenbart einen Ventilblock für Druckluftsteuerung bei der Blasherstellung von Kunststoffflaschen. Der ventilblock umfasst ein Ventilgehäuse, in dem drei ventile untergebracht sind. Das Ventilgehäuse besitzt mehrere Schnittstellen. An der einen Schnittstelle wird eine von einer Druckquelle kommende Fluidleitung angeschlossen, während an der anderen Schnittstelle eine zu einer ansteuernden Einrichtung führende Fluidleitung angeschlossen wird.

Die FR 2 872 082 A1 offenbart eine Blaseinrichtung, in deren Körper drei Ventile untergebracht sind.

Eine ventileinrichtung ist beispielsweise auch aus der WO 02/34500 A1 bekannt, bei der ein im Wesentlichen rechteckig ausgebildeter Ventilträger offenbart ist, an dem an zwei gegenüberliegenden Seiten seines Umfangs in symmetrischer Anordnung ein Niederdruck-Ventil, ein Hochdruck-Ventil und zwei Entlüftungs-ventile angeordnet sind. Die Blasdüse ist über einen Schlitten höhenbeweglich angeordnet und ist in einer Zentralbohrung des Ventilträgers höhenbeweglich geführt und abgedichtet. Die am Umfang des Ventilträgers sitzenden Ventile sind mit ihren Ventilausgängen an Kanäle des Ventilträgers angeschlossen, von wo aus eine Verbindung mit der Blasdüse über eine in der Blasdüse ausgebildete Querbohrung besteht.

Bei der erwähnten Ventileinrichtung sind wenigstens zwei Umfangsseiten des Ventilträgers mit Ventilen belegt, d.h. die Ventile haben einen relativ großen Platzbedarf, wodurch die Baueinheit aus ventilträger und Ventilen relativ sperrig ist.

Aufgabe der Erfindung ist es, eine Ventileinrichtung der eingangs erwähnten Art zu schaffen, die sich in einfacher Weise an einen Ventilträger einer Blaseinrichtung anbauen lässt, wobei sich die dadurch entstehende Einheit durch eine kompakte Bauweise auszeichnet.

Diese Aufgabe wird durch eine Ventileinrichtung mit den Merkmalen des unabhängigen Anspruchs 1 gelöst. Weiterbildungen der Erfindung sind in den Unteransprüchen dargestellt.

Die erfindungsgemäße Ventileinrichtung zeichnet sich dadurch aus, dass die Gehäuseausnehmungen mit ihren jeweiligen Ausnehmungs-Längsachsen im Wesentlichen parallel zur Montagefläche ausgerichtet sind, wobei wenigstens zwei Reihen mit jeweils wenigstens zwei in Reihenrichtung übereinander angeordneten Gehäuseausnehmungen vorgesehen sind.

Sämtliche ventile sind also in einem einzigen ventilgehäuse untergebracht, das platzsparend am Umfang des Ventilträgers befestigt werden kann. Die Ventileinrichtung befindet sich also an einer bestimmten Stelle des Ventilträgers, wodurch eine Verteilung der ventile über den Umfang des Ventilträgers nicht mehr notwendig ist.

Bei einer Weiterbildung der Erfindung weist das Ventilgehäuse einen einzigen an den Arbeitskanal des Ventilträgers ansetzbaren Arbeitsanschluss auf. Dadurch wird erzielt, dass sowohl im Ventilgehäuse als auch im Ventilträger eine wesentlich geringere Anzahl an Kanälen auszubilden ist. Ferner erlaubt der einzelne Arbeitsanschluss eine exakte und eindeutige Positionierung der Ventileinrichtung an der zugeordneten Anbaufläche am Ventilträger, da Arbeitsanschluss und entsprechender Arbeitskanal im Ventilträger zwangsläufig gekoppelt werden müssen.

In besonders bevorzugter Weise ist im Ventilgehäuse ein Arbeitsraum ausgebildet, der mit jeder der Gehäuseausnehmung derart gekoppelt ist, dass in Abhängigkeit von der Stellung des Ventilschiebers und Arbeitsdrucks stehende Arbeitsluft in den Arbeitsraum und von dort über einen ebenfalls im Ventilgehäuse ausgebildeten Sammelkanal zu dem einzigen Arbeitsanschluss gelangen kann. Dadurch dass die einzelnen Ventile alle mit dem Arbeitsraum gekoppelt sind, wird das Totraumvolumen innerhalb des Ventilgehäuses minimiert, ist also wesentlich kleiner als bei der aus dem Stand der Technik bekannten Ventileinrichtung.

Bei einer Weiterbildung der Erfindung münden die Gehäuseausnehmungen jeweils direkt in den Arbeitsraum. Dies ist eine besonders zweckmäßige Ausgestaltung, da hier durch die Geometrie der Gehäuseausnehmung eine Verbindung mit dem Arbeitsraum geschaffen wird. Prinzipiell wäre es jedoch auch denkbar, dass jeder Gehäuseausnehmung ein Verbindungskanal zugeordnet ist, der einerseits mit der Gehäuseausnehmung und andererseits mit dem Arbeitsraum verbunden ist.

Die Gehäuseausnehmungen sind mit ihren jeweiligen Ausnehmungs-Längsachsen im Wesentlichen parallel zur Montagefläche ausgerichtet.

Es sind wenigstens zwei Reihen mit jeweils wenigstens zwei in Reihenrichtung übereinander angeordneten Gehäuseausnehmungen vorgesehen. Zweckmäßigerweise verlaufen die Ausnehmungs-Längsachsen der Gehäuseausnehmungen innerhalb einer Reihe im Wesentlichen höhengestaffelt parallel zueinander. Prinzipiell ist es jedoch auch möglich, dass die Ausnehmungs-Längsachsen der Gehäuseausnehmungen eine koaxiale bzw. fluchtende Ausrichtung zueinander einnehmen.

In besonders bevorzugter Weise ist das Ventilgehäuse mehrteilig aufgebaut, mit einem ersten und einem zweiten Gehäuseteil, die mittels einander zugewandten Fügeflächen aneinander liegen und mittels Befestigungsmitteln zusammengespannt sind, wobei sich die Gehäuseausnehmungen jeweils von im ersten Gehäuseteil ausgebildeten ersten Gehäuseausnehmungsabschnitten und im zweiten Gehäuseteil ausgebildeten zweiten Gehäuseausnehmungsabschnitten zusammensetzen.

Das Ventilgehäuse ist also insgesamt modular aufgebaut, wobei die Gehäuseausnehmungen, insbesondere Gehäusebohrungen, durch die Mehrteiligkeit des Gehäuses in einfacher Weise hergestellt werden können.

Bei einer Weiterbildung der Erfindung ist der Arbeitsraum von einer in der Fügefläche des ersten Gehäuseteils ausgebildeten Vertiefung gebildet und einerseits von die Vertiefung umgebenden Gehäusewandungen des ersten Gehäuseteils und andererseits von der Fügefläche des zweiten Gehäuseteils begrenzt.

Bei einer Weiterbildung der Erfindung ist der Arbeitsraum im Bereich der beiden einander zugewandten Fügeflächen mittels einer Ringdichtung fluiddicht abgedichtet.

Zweckmäßigerweise ist am Ventilgehäuse, insbesondere zweiten Gehäuseteil, ein Steuerventilblock mit der Anzahl der Ventile entsprechenden und zu deren Ansteuerung dienenden Steuerventilen befestigt. Auch die Steuerventile können also zu einem Steuerventilblock zusammengefasst sein, der sich in einfacher Weise am Ventilgehäuse befestigen lässt.

Es ist möglich, dass am Ventilgehäuse, insbesondere ersten Gehäuseteil, eine Drosseleinheit befestigt ist.

Ein bevorzugtes Ausführungsbeispiel ist in der Zeichnung dargestellt und wird im Folgenden näher erläutert. In der zeichnung zeigen:
- Figur 1: eine perspektivische Ansicht eines bevorzugten ersten Ausführungsbeispiels der erfindungsgemäßen Ventileinrichtung,
- Figur 2: eine perspektivische Ansicht des ersten Gehäuseteils der Ventileinrichtung gemäß Figur 1,
- Figur 3: einen Längsschnitt durch ein einzelnes der Ventile der erfindungsgemäßen Ventileinrichtung, wobei der Ventilschieber in zwei unterschiedlichen Funktionsstellungen gezeigt ist,
- Figur 4: eine Prinzipskizze eines zweiten, nicht zur Erfindung gehörenden Ausführungsbeispiels der Ventileinrichtung,
- Figur 5: eine Prinzipskizze eines dritten, nicht zur Erfindung gehörenden Ausführungsbeispiels der Ventileinrichtung,
- Figur 6: eine Prinzipskizze eines vierten, nicht zur Erfindung gehörenden Ausführungsbeispiels der Ventileinrichtung,
- Figur 7: eine Prinzipskizze eines fünften Ausführungsbeispiels der erfindungsgemäßen Ventileinrichtung,
- Figur 8: eine Prinzipskizze eines sechstens Ausführungsbeispiels der erfindungsgemäßen Ventileinrichtung und
- Figur 9: eine Prinzipskizze des bevorzugten ersten Ausführungsbeispiels der erfindungsgemäßen ventileinrichtung.

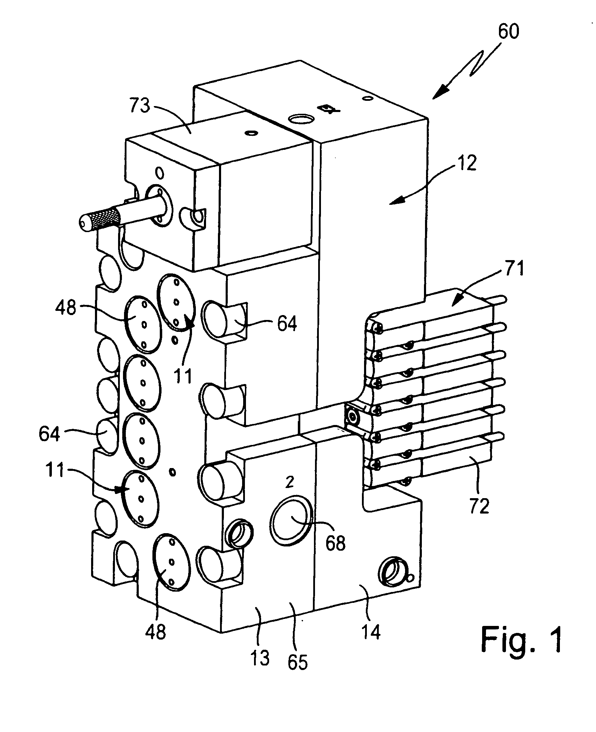

Die Figuren 1 bis 3 und 9 zeigen ein bevorzugtes erstes Ausführungsbeispiel der erfindungsgemäßen ventileinrichtung 60. Die Ventileinrichtung 60 besitzt mehrere Ventile 11, die allesamt in einem gemeinsamen Ventilgehäuse 12 derart untergebracht sind, dass im Ventilgehäuse 12 mehrere längliche Gehäuseausnehmungen 16 ausgebildet sind, in die jeweils ein länglicher Ventilschieber 29 mittels Druckluftbeaufschlagung verschieblich gelagert aufgenommen ist. Die Ventileinrichtung 60 dient zur pneumatischen Steuerung eines Arbeitsdrucks bzw. Blasdrucks bei der Herstellung von blasgeformten, zweckmäßigerweise aus thermoplastischem Material bestehenden Behältern in einer Blaseinrichtung einer Blasmaschine.

Die Blaseinrichtung (nicht dargestellt) besitzt hierzu einen Ventilträger 61, der starr mit einem Ständer (nicht dargestellt) verbunden ist. Im Ventilträger 61 befindet sich eine Durchgangsbohrung 62, in der eine Blasdüse mittels eines Schlittens höhenbeweglich geführt ist. Hinsichtlich der weiteren Funktion einer derartigen Blaseinrichtung mit Blasdüse wird auf die eingangs erwähnte WO 02/34500 A1 verwiesen.

Der Ventilträger 61 besitzt eine Anbaufläche 63, die im Falle, dass der Ventilträger 61 eine quaderähnliche Gestalt aufweist, von einer die Durchgangsbohrung umgebenden Außenfläche des Ventilträgers 61 gebildet ist. Im Ventilträger 61 befindet sich wenigstens ein Verbindungskanal (nicht dargestellt), der die Ventileinrichtung 60 mit der Blasdüse verbindet.

Das Ventilgehäuse 12 besitzt ein erstes Gehäuseteil 13 und ein mit dem ersten Gehäuseteil 13 verbundenes zweites Gehäuseteil 14. Die beiden Gehäuseteile 13, 14 werden mit einander zugewandten Fügeflächen 20a, 20b aneinandergesetzt und mittels Befestigungsmitteln, insbesondere Schrauben 64, zusammengespannt. Hierzu sind sowohl im ersten als auch im zweiten Gehäuseteil 13, 14 Schraublöcher - insbesondere mit Gewinde im zweiten Gehäuseteil 14 - vorgesehen.

Die Gehäuseausnehmungen 16, von denen gemäß bevorzugtem ersten Ausführungsbeispiel sechs an der Zahl vorhanden sind, werden jeweils von im ersten Gehäuseteil 13 ausgebildeten ersten Gehäuseausnehmungsabschnitten 18 und im zweiten Gehäuseteil ausgebildeten zweiten Gehäuseausnehmungsabschnitten 17 gebildet. Wie beispielhaft anhand des bevorzugten ersten Ausführungsbeispieles gezeigt, können die Gehäuseausnehmungen in zwei Reihen hintereinander angeordnet sein, wobei die Ausnehmungs-Längsachsen 19 der Gehäuseausnehmungen 16 parallel zu einer Montagefläche 65 des Ventilgehäuses, mit denen dieses an die Anbaufläche 63 des Ventilträgers 61 angebaut wird, ausgerichtet sind.

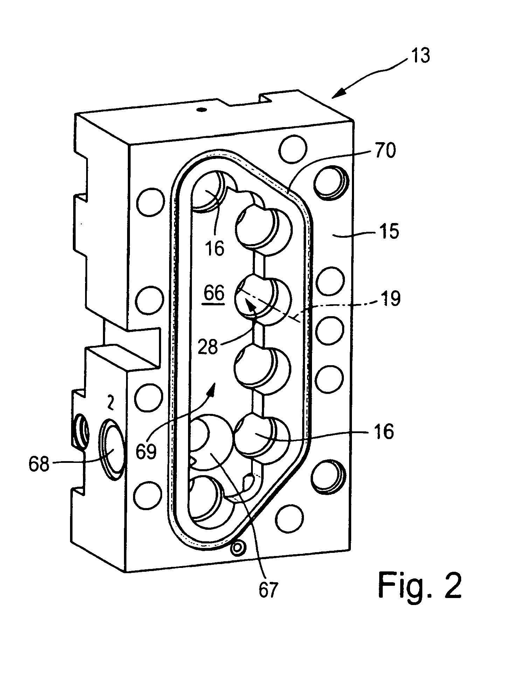

Wie insbesondere in Figur 2 dargestellt, ist im ersten Gehäuseteil 13 ein Arbeitsraum 66 ausgebildet, in den die Gehäuseausnehmungen 16 direkt münden. Dadurch kann in Abhängigkeit von der Stellung des jeweiligen Ventilschiebers 29 unter Arbeitsdruck stehende Arbeitsluft in den Arbeitsraum 66 gelangen. Der Arbeitsraum 66 besitzt gemäß bevorzugtem ersten Ausführungsbeispiel eine trapezartige Grundgestalt, wobei sich die Gehäuseausnehmungen 16 zweckmäßigerweise in einer Reihe entlang der kurzen Trapezlängsseite befinden, mit Ausnahme von zwei Gehäuseausnehmungen 16, die aneinander entgegengesetzten Enden der langen Trapezlängsseite angeordnet sind. Am Grund des Arbeitsraums 66 befindet sich eine Ausgangsöffnung 67, die in einen Sammelkanal 68 mündet, der zunächst ein Stück weit parallel zu den Ausnehmungs-Längsachsen 19 verläuft, bis er dann ungefähr auf der Hälfte der Dicke des ersten Gehäuseteils 13 im Wesentlichen senkrecht zu den Ausnehmungs-Längsachsen 19 zur Schmalseite des ersten Gehäuseteils 13 hin verläuft und an einem einzigen Arbeitsanschluss 68 ausmündet. Dieser einzelne Arbeitsanschluss 68 ist bei der Montage der Ventileinrichtung 60 an den Eingang des Verbindungskanals im Ventilträger 61 anzusetzen, so dass Sammelkanal und Verbindungskanal miteinander korrespondieren, so dass Arbeitsluft mit Arbeitsdruck zur Blasdüse gelangen kann.

Der Arbeitsraum 66 wird von einer Vertiefung 69 im ersten Gehäuseteil 13 gebildet, die sich von der Fügefläche 20a aus ins Innere des ersten Gehäuseteils 13 hinein erstreckt. Begrenzt wird der Arbeitsraum 66 einerseits durch die die Vertiefung 69 umgebenden Gehäusewandungen und andererseits durch die Fügefläche 20b am zweiten Gehäuseteil. Um zu verhindern, dass Arbeitsluft mit Arbeitsdruck aus dem Arbeitsraum über den Spalt zwischen den Fügeflächen 20a, 20b heraustreten kann, ist der Arbeitsraum 66 im Bereich dieser beiden einander zugewandten Fügeflächen 20a, 20b mittels einer Ringdichtung 70 abgedichtet. Wie insbesondere weiter in Figur 2 gezeigt, schneidet die Vertiefung 69 jeweils zumindest einen Teil der Gehäuseausnehmungen, wodurch Arbeitsluft direkt über den angeschnittenen Teil der Gehäuseausnehmungen, der im Folgenden als Kanalabschnitt 28 bezeichnet wird, falls die Stellung des Ventilschiebers 29 dies zulässt, in den Arbeitsraum strömen kann.

Der zweite Gehäuseausnehmungsabschnitt 17 im zweiten Gehäuseteil 14 ist zu einer dem ersten Gehäuseteil 13 zugewandten Fügefläche 20b hin offen ausgestaltet. Sie ist in drei Zylinderabschnitte gegliedert, die von der Fügefläche 20b aus nach innen jeweils mit ihrem Durchmesser abnehmen. Zur Fügefläche 20b hin benachbart ist zunächst ein erster Zylinderabschnitt ausgebildet, an den sich axial zur Ausnehmungs-Längsachse 19 ein durchmesserkleinerer Ringraum 21 anschließt, an den sich schließlich ein noch durchmesserkleinerer Endabschnitt 22 anschließt. Bei der Herstellung des zweiten Gehäuseausnehmungsabschnitts 17 wird zweckmäßigerweise zunächst in Axialrichtung der durchmesserkleinste Endabschnitt 22 dann anschließend der Ringraum 21 und dann der Zylinderabschnitt gefertigt, beispielsweise gebohrt. Vom Ringraum 21 gehen gemäß bevorzugtem Ausführungsbeispiel zwei sich im Wesentlichen parallel zur Ausnehmungs-Längsachse 19 erstreckende Kanäle 23a, 23b ab. Diese Kanäle 23a, 23b mündenden an der Stirnseite 24 des ersten Gehäuseteils 13 aus. Die Kanäle 23a, 23b dienen zur Zufuhr von unter Arbeitsdruck stehender Speiseluft.

Auch der erste Gehäuseausnehmungsabschnitt 18 besteht aus Zylinderabschnitten mit unterschiedlich großem Durchmesser. Von der Fügefläche 20a ausgehend erstreckt sich zunächst ein Zylinderabschnitt in axialer Richtung, der sich in einen relativ langen Mittelabschnitt 25 verjüngt, wobei die Durchmesserverkleinerung relativ gering ausfällt. Dieser Mittelabschnitt 25 erstreckt sich in axialer Richtung. An diesem Mittelabschnitt 25 schließt sich ein durchmessergroßer Endabschnitt 26 an, der zur Lagerung eines Gehäusedeckels 27 dient. Im ersten Gehäuseteil 14 befindet sich der Kanalabschnitt 28, der Teil des Arbeitsraums 66 ist und quer zur Ausnehmungs-Längsachse 19 ausgerichtet ist und in den an die Fügefläche 20a angrenzenden Zylinderabschnitt des ersten Gehäuseausnehmungsabschnitts 18 einmündet.

In der Gehäuseausnehmung 16 ist ein Ventilglied in Form eines länglichen Ventilschiebers 29 mittels Druckluftbeaufschlagung verschieblich gelagert aufgenommen. Der Ventilschieber 29 ist gemäß bevorzugtem Ausführungsbeispiel mehrteilig aufgebaut und besitzt einen dem zweiten Gehäuseteil 14 zugeordneten Steuerabschnitt 30 und einen über Verbindungsmittel mit dem Steuerabschnitt 30 verbundenen, dem ersten Gehäuseteil 13 zugeordneten Stellabschnitt 31.

Der Steuerabschnitt 30 ist zylindrisch ausgebildet und besitzt eine durchmessergroße Kolbenpartie 32, die verschieblich im Endabschnitt 22 des zweiten Gehäuseteils 14 geführt ist. Die Stirnseite der Kolbenpartie 32 bildet eine Steuerfläche 33, die mit Steuerluft beaufschlagt werden kann. Die Steuerfläche 33 der Kolbenpartie 32 und die den Endabschnitt 22 umgebende Gehäusewandung bilden gemeinsam eine Steuerkammer 34, über die mittels einer nicht dargestellten Steuerluftleitung Steuerluft einleitbar ist, um den Ventilschieber 29 linear zu bewegen. Zur fluiddichten Abdichtung der Steuerkammer 34 dient ein Dichtelement 35. Ferner ist ein Führungselement 36 zur Führung des Ventilschiebers 29 vorgesehen. An die Kolbenpartie 32 schließt sich in Axialrichtung eine durchmesserkleinere Mittelpartie 37 an, die endseitig, also der Kolbenpartie 32 entgegengesetzt, in eine durchmesssergrößere Flanschpartie 38 übergeht. An diese Flanschpartie 38 ist eine korrespondierende Flanschpartie 39 am Stellabschnitt 31 angesetzt. Zwischen der Steuerfläche 33 der Kolbenpartie 32 und der gegenüberliegenden Fläche 57 befindet sich ein Endlagendämpfmittel in Form eines flexiblen gummielastischen Puffers 56.

Steuerabschnitt 30 und Stellabschnitt 31 werden über Verbindungsmittel in Form einer Schraube miteinander verbunden, wobei gemäß bevorzugtem Ausführungsbeispiel die Schraube konzentrisch zur Gehäuse-Längsachse 19 angeordnet ist und über eine zylindrische Ausnehmung 41 im Stellabschnitt 31 montiert werden kann. Die zylindrische Ausnehmung 41 ist ebenfalls konzentrisch zur Gehäuse-Längsachse 19 ausgerichtet. In der Flanschpartie 39 des Stellabschnitts 31 befindet sich eine ringförmige Ausnehmung, in die ein weiteres Dichtelement 42 eingesetzt ist. Das Dichtelement 42 ragt radial über den Au-βenumfang des Stellabschnitts 31 hinaus. In der Dichtstellung korrespondiert das weitere Dichtelement 42 mit einer Dichtungshülse 43, die in den an die Fügefläche 20 angrenzenden Zylinderabschnitt des ersten Gehäuseausnehmungsabschnitt 17, der nachfolgend als Hülsenaufnahme 44 bezeichnet wird, eingesetzt. Gemäß bevorzugtem Ausführungsbeispiel besteht die Dichtungshülse 43 aus Metall und ist in die Hülsenaufnahme 44 eingepresst, sitzt also mit Presssitz in der Hülsenaufnahme 44. Die Dichtungshülse 43 weist an ihrem Innenumfang ein in axialer Richtung verlaufende Kontur 45 auf, die derart ausgebildet ist, dass das Dichtelemente 42 bei dessen in Eingriff Bewegung verpresst wird, wodurch eine zuverlässige fluiddichte Abdichtung in dieser Stellung geschaffen wird. Hierzu ist die Kontur im Längsschnitt durch die Dichtungshülse 43 konvex ausgestaltet, wobei sich die Kontur bis zu einem Scheitelpunkt 46 hin verjüngt, an dem die größte Presswirkung auf das Dichtelement 42 und somit eine optimale fluiddichte Abdichtung auftritt.

Die Stirnseite des Stellabschnitts 31 dient als Stellfläche 47a, auf die Stellmittel in Form einer Luftfeder wirken, wodurch der Ventilschieber 29 in die in der Figur in der unteren Darstellung gezeigten Grundstellung bewegbar ist und dort gehalten werden kann. Wie bereits erwähnt befindet sich am zweiten Gehäuseteil 14 ein Gehäusedeckel 27, der einen durchmessergroßen Lagerabschnitt 48 besitzt, der in axialer Richtung in einen Fortsatz 49 übergeht. Dieser Fortsatz 49 ragt in die zylindrische Ausnehmung 41 am Stellabschnitt hinein, d.h. der Ventilschieber 29 fährt mit seiner zylindrischen Ausnehmung 41 über den Fortsatz 49. An dem dem Lagerabschnitt 28 abgewandten Ende des Fortsatzes 49 befindet sich ein weiteres Dichtelement 50. Der Außenumfang des Fortsatzes 49, die Stellfläche 47a und die dem Fortsatz 49 zugewandte Seitenfläche des Lagerabschnitts 48 bilden gemeinsame eine Stellkammer 51, die mit Druckluft beaufschlagt ist, wodurch eine Luftfeder geschaffen wird, die den Ventilschieber 29 in die Grundstellung drückt. Zur Abdichtung der Stellkammer ist ein Dichtelement 52 am Außenumfang des Stellabschnitts vorgesehen. Des Weiteren ist auch auf dieser Seite des Stellabschnitts ein Führungselement 53 angeordnet. Ferner dient das Dichtelement 50 zur Abdichtung der Stellkammer gegenüber einer inneren Kammer 54, die in der Figur in der unteren Darstellung gezeigt ist. Diese innere Kammer 54 wird gebildet von der Stirnseite des Fortsatzes und der zylindrischen Ausnehmung 41 im zweiten Gehäuseteil 14. Die innere Kammer 54 korrespondiert mit einer Atmungsbohrung 55, die ihrerseits zur Atmosphäre ausmündet, damit eine Verdrängung der in der inneren Kammer 54 befindlichen Luft und somit eine Relativbewegung zwischen dem Stellabschnitt 31 und dem Fortsatz 49 möglich ist.

Es ist alternativ möglich, die Fläche 47b als Stellfläche für die Luftfeder zu verwenden. In diesem Fall dient die innere Kammer als Stellkammer, die mit Stelldruck beaufschlagbar ist, wodurch aufgrund des auf die Fläche 47b wirkenden Stelldrucks eine Verschiebung des Ventilschiebers 29 in die Grundstellung erfolgt. Die Druckluftbeaufschlagung der Stellkammer erfolgt in diesem Fall über einen im Fortsatz angeordneten Fluidkanal (nicht dargestellt) und einen in der Gehäusewand beispielsweise in radialer Richtung verlaufenden, mit dem Fluidkanal korrespondierenden Stellkammer-Steuerkanal (nicht dargestellt). Beim Ausfahren des Ventilschiebers 29 aus der Grundstellung wird die im ringförmigen Raum zwischen Gehäusewand und Fortsatz befindliche Luft, über eine nicht dargestellte Atmungsbohrung verdrängt.

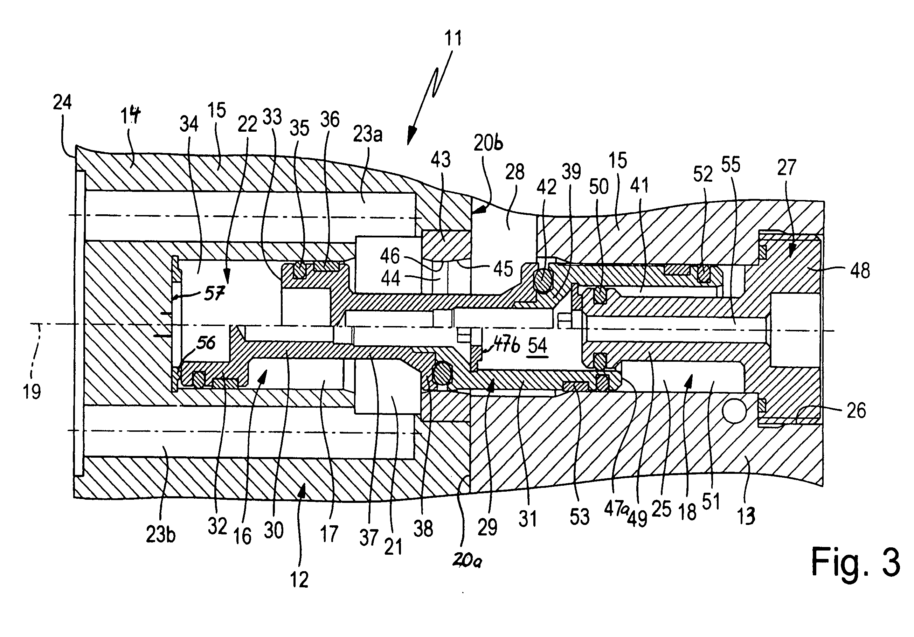

Wie beispielhaft in der Figur 3 dargestellt, befindet sich der Ventilschieber in der Grundstellung (untere Hälfte), die als NC (normaly closed)-Stellung bezeichnet werden kann. Die Funktionsweise des Ventils 11 ist beispielhaft anhand eines 2/2 NC-Wege-Ventils erläutert, es können jedoch auch 2/2 NO (normally open), 3/2 NO bzw. NC oder noch andere Ventiltypen realisiert sein. Der Ventilschieber 29 wird über die Luftfeder, also mittels des Stelldrucks in der Stellkammer 51 in die Grundstellung gedrückt und dort gehalten. Die Endlagendämpfung in Form des gummielastischen Puffers 56 sorgt dafür, dass bei der Bewegung in die Grundstellung kein harter Anschlag der Stirnseite bzw. der Steuerfläche an der Gehäusewand erfolgt. In dieser Grundstellung befindet sich das Dichtelement 42 am Scheitelpunkt der Dichthülse 43, wodurch eine fluiddichte Abdichtung des Kanalabschnitts 28 von den Kanälen 23a, 23b vorliegt. Die anstehende Speiseluft und der Arbeitsdruck können also nicht zum Kanalabschnitt 28 und zur Arbeitskammer 66 gelangen und dort abgegriffen werden. Der Kanalabschnitt 28 kann ebenso als Arbeitskanal verwendet werden. Die Kanäle 23a, 23b werden dann zu Speisekanälen. Das Ventil 11 ist also reversibel betreibbar. Um einen Schaltvorgang des Ventils einzuleiten, wird die Steuerkammer 34 mit Steuerdruck beaufschlagt. Zweckmäßigerweise stammt der Steuerdruck aus einer gemeinsamen Steuerluftversorgung, aus der auch der gleich große Stelldruck für die Luftfeder stammt. Der Steuerdruck bzw. die Steuerluft wird also in die Steuerkammer 51 eingeleitet, wodurch der Ventilschieber 29 aufgrund der relativ großen Steuerfläche 33 und des im Wesentlichen druckausgeglichenen Ventilschiebers 29 aus der Grundstellung heraus bewegt wird. Dabei fährt der Stellabschnitt 31 des Ventilschiebers 29 auf den Fortsatz 49 des Gehäusedeckels 27 auf und die in der inneren Kammer 54 befindliche Luft wird über die Atmungsbohrung 55 in die Atmosphäre verdrängt. Gleichzeitig kommt das Dichtelement 42 außer Kontakt mit der Dichtungshülse 43, wodurch die Kanäle 23a, 23b und die Arbeitskammer 66 fluidisch miteinander verbunden sind. In dieser Stellung kann die unter Arbeitsdruck stehende Speiseluft als Arbeitsluft in die Arbeitskammer 66 und von dort über den Sammelkanal 67 zum Arbeitsanschluss 68 gelangen und von dort als Blasdruck abgegriffen werden. Es ist auch möglich, das Ventil 11 rückwärts zu betreiben, dass also Speiseluft der Arbeitskammer 66 zugeführt und von dort bei nicht in Grundstellung befindlichem Ventilschieber 29 in die Arbeitskanäle 23a, 23b strömt.

Wie insbesondere die Grundstellung des Ventilschiebers 29 zeigt, steht die Speiseluft in der geschlossenen Stellung also sowohl an dem Dichtelement 36 als auch an dem Dichtelement 42 an. Dabei sind die Außenseiten der beiden Dichtelemente D 36, 42 im Wesentlichen auf gleicher Höhe, so dass die Wirkflächen dieser Dichtelemente 36, 42 im Wesentlichen gleich groß sind. Der Ventilschieber 29 ist folglich druckausgeglichen, so dass durch die anstehende Speiseluft keine Bewegung in die eine oder andere Richtung erfolgt.

Die Ventileinrichtung 11 ist also derart ausgestaltet, dass ein Schalten völlig unabhängig vom anstehenden Arbeitsdruck erfolgt. Dadurch können sehr kurze Schaltzeiten realisiert werden, insbesondere auch nach einem Stillstand, da das Schalten mittels Beaufschlagung der Steuerkammer 34 mit Steuerdruck erfolgen kann. Da keine Abhängigkeit des Schaltvorgangs vom Arbeitsdruck besteht, kann der Steuerraum bzw. die Steuerkammer 34 auch relativ klein dimensioniert werden, wo-durch die Baugröße des Ventils 11 insgesamt relativ klein gehalten werden kann.

Wie insbesondere in Figur 1 dargestellt, ist am zweiten Gehäuseteil 14 ein Steuerventilblock 71 mit der Anzahl der Ventile entsprechenden und zu deren Ansteuerung dienenden Steuerventilen 72 befestigt. Die Steuerventile 72 dienen zur pneumatischen Ansteuerung der in den Gehäuseausnehmungen befindlichen Ventilschiebern 29 gemäß der vorstehend beschriebenen Weise. Am Ventilgehäuse 12 ist ferner noch eine Drosseleinheit 73 angebaut.

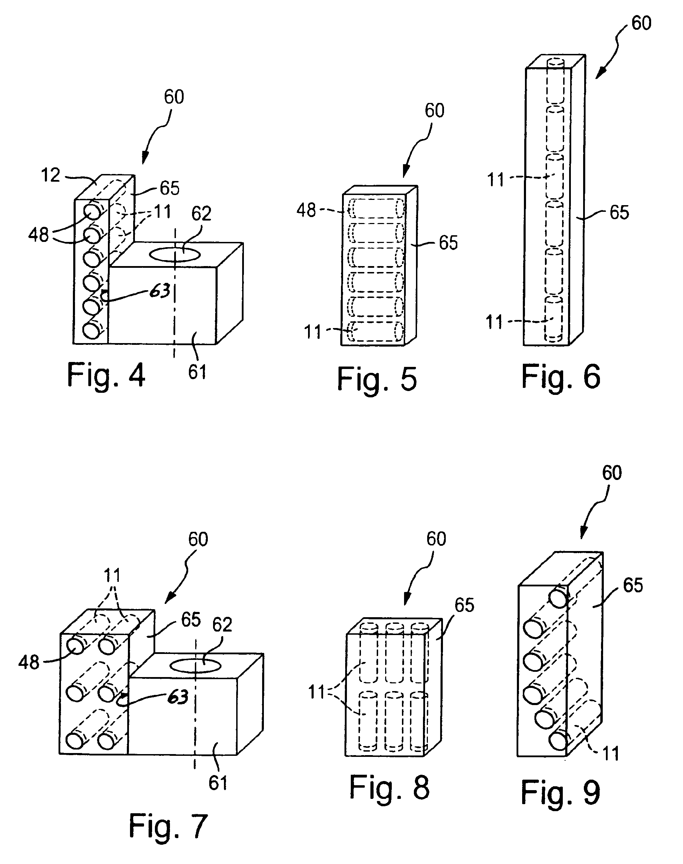

Die Figuren 4 bis 8 zeigen weitere Ausführungsbeispiele der Ventileinrichtung.

Gemäß dem in Figur 4 gezeigten zweiten Ausführungsbeispiel sind die Gehäuseausnehmungen 16 mit den zugeordneten Ventilschiebern 29, also die Ventile 11 in einer einzelnen Reihe übereinander angeordnet, wobei die Ausnehmungs-Längsachsen 19 im Wesentlichen höhenversetzt parallel zueinander und parallel zur Montagefläche 65 ausgerichtet sind.

Gemäß dem in Figur 5 gezeigten dritten Ausführungsbeispiel ist hier ebenfalls eine Reihe von übereinanderliegenden Gehäuseausnehmungen 19 vorgesehen, wobei um Unterschied zum zweiten Ausführungsbeispiel die Ausnehmungs-Längsachsen 19 senkrecht zur Montagefläche 65 ausgerichtet sind.

Bei dem in Figur 6 gezeigten vierten Ausführungsbeispiel ist ebenfalls eine einzige Reihe an Gehäuseausnehmungen 16 mit zugeordneten Ventilschiebern 29 also Ventilen vorgesehen, wobei die Ausnehmungs-Längsachsen 19 koaxial also fluchtend zueinander ausgerichtet sind im Gegensatz zu den in den Figuren 4 und 5 gezeigten Ausführungsbeispielen.

Figur 7 zeigt ein fünftes Ausführungsbeispiel, das an das in Figur 4 gezeigte erste Ausführungsbeispiel angelehnt ist, mit dem Unterschied, dass hier zwei Reihen an Gehäuseausnehmungen 16 mit zugeordneten Ventilschiebern 29 also Ventilen vorgesehen sind.

Schließlich zeigt Figur 8 ein sechstes Ausführungsbeispiel der erfindungsgemäßen Ventileinrichtung 60, das an das in Figur 6 gezeigte vierte Ausführungsbeispiel angelehnt ist mit dem Unterschied, dass auch hier mehrere Reihen an übereinanderliegenden Gehäuseausnehmungen 16 mit zugeordneten Ventilschiebern also Ventilen vorgesehen sind.

Die Funktion der Ventile 11 in der Ventileinrichtung 60 kann mono bzw. bistabil sein. Die Ventile 11 können als 2/2- oder 3/2 NC oder NO-Ventile ausgebildet sein. Es ist auch möglich, die Ventileinrichtung rückwärts zu betreiben, d.h. dass Luft über den Arbeitsanschluss in den Arbeitsraum und von dort über die Ventile in die Atmosphäre oder zu externen Funktionsbaueinheiten strömt. Beispielsweise kann dies durch ein Entlüften der Blasdüse verwirklicht werden. Die in der Ventileinrichtung 60 enthaltenen Ventile 11 können neben der Bereitstellung unterschiedliche Arbeitsdrücke und Entlüftungsfunktionen auch beispielsweise einem für die Bewegung der Blasdüse verantwortlichen Arbeitszylinder zugeordnet sein und/oder im Falle des Einsatzes eines Reckdorns in der Blasdüse auch für die Bewegung des Reckdorns eingesetzt werden.

Insgesamt zeichnet sich die erfindungsgemäße Ventileinrichtung durch eine sehr kompakte Bauweise aus, da die Ventile 11 alle in einen gemeinsamen Arbeitsraum 66 münden. Ferner kann die Ventileinrichtung 60 platzsparend an einer einzelnen Anbaufläche des Ventilträgers 61 angebaut werden.

## Patentansprüche

1. Ventileinrichtung für eine mit Hochdruck arbeitende Blaseinrichtung einer Blasmaschine zur Erzeugung von geblasenen Hohlkörpern, mit wenigstens einem Ventil (11), das an eine Anbaufläche (63) eines zur Blaseinrichtung gehörenden Ventilträgers (61) derart anbaubar ist, dass wenigstens ein Ventilausgang des Ventils (11) über wenigstens einen im Ventilträger (61) ausgebildeten Arbeitskanal mit einer ebenfalls zur Blaseinrichtung gehörenden Blasdüse zur pneumatischen Ansteuerung koppelbar ist, wobei die Ventileinrichtung (60) mehrere Ventile (11) aufweist, die allesamt in einem gemeinsamen, mit einer Montagefläche (65) zum Anbau an die am Ventilträger (61) ausgebildete Anbaufläche ausgestatteten Ventilgehäuse (12) derart untergebracht sind, dass im Ventilgehäuse (12) mehrere längliche Gehäuseausnehmungen (16) ausgebildet sind, in die jeweils ein länglicher Ventilschieber (29) mittels Druckluftbeaufschlagung verschieblich gelagert aufgenommen ist, wobei die Gehäuseausnehmungen (16) mit ihren jeweiligen Ausnehmungs-Längsachsen (19) im Wesentlichen parallel zur Montagefläche (65) ausgerichtet sind, **dadurch gekennzeichnet, dass** wenigstens zwei Reihen mit jeweils wenigstens zwei in Reihenrichtung übereinander angeordneten Gehäuseausnehmungen (16) vorgesehen sind.

2. Ventileinrichtung nach Anspruch 1, **dadurch gekennzeichnet, dass** das Ventilgehäuse (12) einen einzigen, an den Arbeitskanal im Ventilträger (61) ansetzbaren Arbeitsanschluss (68) aufweist.

3. Ventileinrichtung nach Anspruch 2, **dadurch gekennzeichnet, dass** im Ventilgehäuse (12) ein Arbeitsraum (66) ausgebildet ist, der mit jeder der Gehäuseausnehmungen (16) derart gekoppelt ist, dass in Abhängigkeit von der Stellung des jeweiligen Ventilschiebers (29) unter Arbeitsdruck stehende Arbeitsluft in den Arbeitsraum (66) und von dort über einen ebenfalls im Ventilgehäuse (12) ausgebildeten Sammelkanal (67) zu dem einzigen Arbeitsanschluss (68) gelangen kann.

4. Ventileinrichtung nach Anspruch 3, **dadurch gekennzeichnet, dass** die Gehäuseausnehmungen (16) jeweils direkt in den Arbeitsraum (66) münden.

5. Ventileinrichtung nach einem der vorhergehenden Ansprüche, **dadurch gekennzeichnet, dass** die Ausnehmungs-Längsachsen (19) der Gehäuseausnehmungen (16) innerhalb einer Reihe im Wesentlichen höhengestaffelt parallel zueinander verlaufen.

6. Ventileinrichtung nach einem der vorhergehenden Ansprüche; **dadurch gekennzeichnet, dass** das Ventilgehäuse (12) mehrteilig aufgebaut ist, mit einem ersten und einem zweiten Gehäuseteil (13, 14), die mittels einander zugewandten Fügeflächen (20a, 20b) aneinander anliegen und mittels Befestigungsmitteln zusammengespannt sind, wobei sich die Gehäuseausnehmungen (16) jeweils von im ersten Gehäuseteil (13) ausgebildeten ersten Gehäuseausnehmungsabschnitten (17) und im zweiten Gehäuseteil (14) ausgebildeten zweiten Gehäuseausnehmungsabschnitten (18) zusammensetzen.

7. Ventileinrichtung nach Anspruch 6, **dadurch gekennzeichnet, dass** der Arbeitsraum (66) von einer in der Fügefläche (20a) des ersten Gehäuseteils (13) ausgebildeten Vertiefung (69) gebildet ist und einerseits die Vertiefung (59) umgebenen Gehäusewandungen des ersten Gehäuseteils (13) und andererseits von der Fügefläche (20b) des zweiten Gehäuseteils (14) begrenzt ist.

8. Ventileinrichtung nach einem der Ansprüche 6 oder 7, **dadurch gekennzeichnet, dass** der Arbeitsraum (66) im Bereich der beiden einander zugewandten Fügeflächen (20a, 20b) mittels einer Ringdichtung (70) fluiddicht abgedichtet ist.

9. Ventileinrichtung nach einem der Ansprüche 6 bis 8, **dadurch gekennzeichnet, dass** am Ventilgehäuse (12), insbesondere zweiten Gehäuseteil (14), ein Steuerventilblock (71) mit der Anzahl der der Ventile (11) entsprechenden und zu deren Ansteuerung dienenden Steuerventilen (72) befestigt ist.

10. Ventileinrichtung nach einem der Ansprüche 6 bis 9, **dadurch gekennzeichnet, dass** am Ventilgehäuse (12), insbesondere ersten Gehäuseteil (13), eine Drosseleinheit (53) befestigt ist.

## Claims

1. Valve device for a blowing device of a blowing machine operating with high pressure for the production of hollow bodies, with at least one valve (11) which may be attached to an attachment face (63) of a valve carrier (61) belonging to a blowing device in such a way that at least one valve outlet of the valve (11) may be connected for pneumatic activation via at least one operating passage formed in the valve carrier (61) to a blowing nozzle also belonging to the blowing device, wherein the valve device (60) has several valves (11) which are altogether accommodated, in a common valve housing (12) equipped with a mounting face (65) for attaching to the attachment face formed on the valve carrier (61), in such a way that formed in the valve housing (12) are several elongated housing recesses (16) in each of which is mounted an elongated valve spool (29) able to move under compressed air pressurisation, wherein the housing recesses (16) are aligned with their respective recess longitudinal axes (19) substantially parallel to the mounting face (65), **characterised in that** at least two rows, each with at least two housing recesses (16) arranged one above the other in the row direction, are provided.

2. Valve device according to claim 1, **characterised in that** the valve housing (12) has a single operating port (68) which may be attached to the operating passage in the valve carrier (61).

3. Valve device according to claim 2, **characterised in that** a working chamber (66) is formed in the valve housing (12) and is connected to each of the housing recesses (16) in such a way that, depending on the position of the respective valve spool (29), operating air under operating pressure may pass into the working chamber (66) and from there travel via a collecting passage (67) also formed in the valve housing (12) to the single operating port (68).

4. Valve device according to claim 3, **characterised in that** the housing recesses (16) each lead directly into the working chamber (66).

5. Valve device according to any of the preceding claims, **characterised in that** the recess longitudinal axes (19) of the housing recesses (16) run parallel to one another within a row, substantially graduated in height.

6. Valve device according to any of the preceding claims, **characterised in that** the valve housing (12) is made up of several parts, with a first and a second housing part (13, 14) which abut one another with facing joining faces (20a, 20b) and are clamped together by fastening means, wherein the housing recesses (16) are each comprised of first housing recess sections (17) formed in the first housing part (13) and second housing recess sections (18) formed in the second housing part (14).

7. Valve device according to claim 6, **characterised in that** the working chamber (66) is formed by a recess (69) formed in the joining face (20a) of the first housing part (13) and is bounded on one side by the housing walls of the first housing part (13) encompassing the recess (69) and on the other side by the joining face (20b) of the second housing part (14).

8. Valve device according to claims 6 or 7, **characterised in that** the working chamber (66) has a fluid-tight seal, provided by a ring seal (70), in the area of the two joining faces (20a, 20b) which face one another.

9. Valve device according to any of claims 6 to 8, **characterised in that** there is fastened to the valve housing (12), in particular the second housing part (14), a control valve block (71) with a number of control valves (72) corresponding to the number of valves (11) and serving for their activation.

10. Valve device according to any of claims 6 to 9, **characterised in that** a restrictor unit (53) is attached to the valve housing (12), in particular to the first housing part (13).

## Revendications

1. Dispositif de soupape pour un dispositif de soufflage, fonctionnant à haute pression, d'une machine de soufflage servant à produire des corps creux soufflés, comprenant au moins une soupape (11) qui peut être montée au niveau d'une surface de montage (63) d'un support de soupape (61) faisant partie du dispositif de soufflage de telle manière qu'au moins une sortie de soupape de la soupape (11) peut être couplée par l'intermédiaire au moins d'un canal de travail réalisé dans le support de soupape (61) à une tuyère faisant partie de la même manière du dispositif de soufflage aux fins de la commande pneumatique, sachant que le dispositif de soupape (60) présente plusieurs soupapes (11), qui sont toutes logées dans un carter de soupape (12) commun équipé d'une surface de montage (65) destinée à être montée au niveau de la surface de montage réalisée au niveau du support de soupape (61) de telle manière que plusieurs évidements de carter (16) allongés sont réalisés dans le carter de soupape (12), dans lesquels respectivement un tiroir de soupape (29) allongé est logé de manière à pouvoir être déplacé par coulissement au moyen d'une sollicitation par air comprimé, sachant que les évidements de carter (16) sont orientés avec leurs axes longitudinaux d'évidement respectifs (19) essentiellement de manière parallèle par rapport à la surface de montage (65), **caractérisé en ce que** sont prévues au moins deux rangées comprenant respectivement au moins deux évidements de carter (16) disposés l'un au-dessus de l'autre dans la direction d'alignement.

2. Dispositif de soupape selon la revendication 1, **caractérisé en ce que** le carter de soupape (12) présente un raccordement de travail (68) unique pouvant être mis en place dans le support de soupape (61) au niveau du canal de travail.

3. Dispositif de soupape selon la revendication 2, **caractérisé en ce qu'**est réalisé dans le carter de soupape (12) un espace de travail (66) qui est couplé à chacun des évidements de carter (16) de telle manière qu'en fonction de la position du tiroir de soupape (29) respectif de l'air de travail sous pression de travail peut parvenir dans l'espace de travail (66) et de là peut parvenir par l'intermédiaire d'un canal de collecte (67) réalisé de la même manière dans le carter de soupape (12) jusqu'au raccordement de travail (68) unique.

4. Dispositif de soupape selon la revendication 3, **caractérisé en ce que** les évidements de carter (16) débouchent respectivement directement dans l'espace de travail (66).

5. Dispositif de soupape selon l'une quelconque des revendications précédentes, **caractérisé en ce que** les axes longitudinaux d'évidement (19) des évidements de carter (16) s'étendent de manière parallèle les uns par rapport aux autres essentiellement de manière échelonnée en hauteur au sein d'une rangée.

6. Dispositif de soupape selon l'une quelconque des revendications précédentes, **caractérisé en ce que** le carter de soupape (12) présente une structure en plusieurs parties, avec une première et une deuxième partie de carter (13, 14), lesquelles reposent l'une contre l'autre au moyen de surfaces d'assemblage (20a, 20b) tournées les unes vers les autres et sont serrées l'une contre l'autre au moyen de moyens de fixation, sachant que les évidements de carter (16) se composent respectivement de premières sections d'évidement de carter (17) réalisées dans la première partie de carter (13) et de deuxièmes sections d'évidement de carter (18) réalisées dans la deuxième partie de carter (14).

7. Dispositif de soupape selon la revendication 6, **caractérisé en ce que** l'espace de travail (66) est formé par un renfoncement réalisé dans la surface d'assemblage (20a) de la première partie de carter (13), et est délimité d'un côté par les parois de carter de la première partie de carter (13) entourant ledit renfoncement (69) et de l'autre côté par la surface d'assemblage (20b) de la deuxième partie de carter (14).

8. Dispositif de soupape selon l'une quelconque des revendications 6 ou 7, **caractérisé en ce que** l'espace de travail (66) est étanchéifié de manière étanche aux fluides dans la zone des deux surfaces d'assemblage (20a, 20b) tournées l'une vers l'autre au moyen d'un joint d'étanchéité annulaire (70).

9. Dispositif de soupape selon l'une quelconque des revendications 6 à 8, **caractérisé en ce qu'**un bloc à soupapes de commande (71) présentant des soupapes de commande (72) correspondant au nombre des soupapes (11) et servant à la commande de ces dernières est fixé au niveau du carter de soupape (12), en particulier au niveau de la deuxième partie de carter (14).

10. Dispositif de soupape selon l'une quelconque des revendications 6 à 9, **caractérisé en ce qu'**une unité d'étranglement (53) est fixée au niveau du carter de soupape (12), en particulier au niveau de la première partie de carter (13).
